# EUROPÄISCHE PATENTSCHRIFT

(11) **EP 3 287 305 B1**
(45) Veröffentlichungstag und Bekanntmachung des Hinweises auf die Patenterteilung: **05.08.2020**
(21) Anmeldenummer: 16185310.6
(22) Anmeldetag: 23.08.2016
(51) Int. Cl.: B60D 5/00, B61D 17/22, B62D 47/02

(54) **SCHERENGESTELL UND ÜBERGANG MIT SCHERENGESTELL**
SCISSOR-TYPE STAND AND TRANSITION WITH SCISSOR-TYPE STAND
STRUCTURE ARTICULEE ET PASSAGE COMPRENANT UNE STRUCTURE ARTICULEE

(43) Veröffentlichungstag der Anmeldung: 28.02.2018
(73) Patentinhaber: Hübner GmbH & Co. KG, 34123 Kassel (DE)
(72) Erfinder: Krug, Michael, 34305 Niedenstein (DE)
(74) Vertreter: Patentanwälte Walther Hinz Bayer PartGmbB

(56) Entgegenhaltungen:
- WO-A1-95/06580
- GB-A- 810 734
- US-A- 3 335 815

## Beschreibung

Die Erfindung betrifft sowohl ein Scherengestell mit mindestens einem ersten und einem zweiten Scherensegmentgemäß dem Oberbegriff des Anspruchs 1 als auch einen Übergang mit mindestens einem solchen Scherengestell.

Scherengestelle sind aus dem Stand der Technik hinreichend bekannt. So sind beispielsweise Scherengestelle als Hubeinrichtungen bei Scherenhebebühnen bekannt. Darüber hinaus werden Scherengestelle auch als teleskopierbare Auszugseinrichtungen verwendet, beispielsweise zur Aufnahme von Telefonen.

In diesem Zusammenhang wird auf die US 3,335,815 A verwiesen, die zwei parallel zueinander auf eine Führungsstange angeordnete Scherengestelle beschreibt, wobei die beiden Scherengestelle seitlich miteinander durch eine Mehrzahl von Gelenken mit parallel zur Auszugsebene verlaufenden Gelenkachsen verbunden sind. Die beiden Scherengestelle sind durch ein drittes Scherengestell zwangsgeführt, das hinter bzw. vor den beiden seitlich miteinander verbundenen Scherengestellen angeordnet ist und jeweils endseitig mit diesen verbunden ist.

Weiterhin ist auch der Einsatz von Scherengestellen aus dem Fahrzeugbau bekannt. So werden insbesondere bei Gelenkfahrzeugen solche Scherengestelle eingesetzt. In diesem Zusammenhang wird beispielsweise auf die EP 0 722 873 B1 verwiesen, aus der ein Übergang mit einer Gliederbrücke bekannt ist, wobei die einzelnen Glieder einer solchen Gliederbrücke durch ein Scherengestell miteinander verbunden sind, um den Aus- bzw. Einzug der Gliederelemente einer solchen Gliederbrücke zu vergleichmäßigen; dies vor dem Hintergrund, dass zwischen den einzelnen Gliedern keine Zwischenräume entstehen sollen. Das heißt, dass die Schere der Vergleichmäßigung des Auszugs einer solchen Gliederbrücke dient.

In diesem Zusammenhang ist des Weiteren in der WO 95/06580 eine Übergangseinrichtung zwischen zwei gekuppelten Fahrzeugen beschrieben, wobei die Übergangseinrichtung zwei Balghälften umfasst, die durch zwei Kuppelrahmen miteinander kuppelbar sind. Die beiden Kuppelrahmen sind jeweils im Boden- und im Dachbereich durch jeweils ein Scherengestellpaar mit dem jeweiligen Fahrzeug, zwischen denen der Übergang angeordnet ist, verbunden. Die Scherengestelle sowohl im Boden- als auch im Dachbereich sollen eine Abstützung der Kuppelrahmen bewirken, wobei gleichzeitig sichergestellt ist, dass, aufgrund der Ausbildung dieser als Stützelemente wirkenden Scherengestelle, die Kuppelrahmen und mithin die daran angeordneten Bälge den Fahrbewegungen der Fahrzeuge folgen können. Wie bereits an anderer Stelle erläutert, ist jeder der beiden Kuppelrahmen sowohl im Dachbereich als auch im Bodenbereich durch jeweils ein Scherengestellpaar mit dem entsprechenden Wagenkasten des Fahrzeugs verbunden. Allerdings sind auch die Scherengestelle eines Scherengestellpaares mit den Scherengestellen des anderen, gegenüberliegenden Scherengestellpaares verbunden. Zur Verbindung der Scherengestelle sind hierbei Kupplungsbolzen vorgesehen, die zum Lösen der Kuppelrahmen lediglich entfernt werden müssen, um die beiden zunächst miteinander verbundenen Fahrzeugteile im Bereich der Kuppelrahmen trennen zu können.

Das heißt, dass aus dem Stand der Technik eine Verbindung zweier Scherengestelle bekannt ist, wobei im Bereich der Kuppelrahmen die unmittelbare Verbindung der Scherensegmente von zwei zu verbindenden Scherengestellen in Bezug auf die Scherenarme in Auszugsrichtung nicht kraftübertragend ist. Die Scherengestelle dienen vielmehr primär dazu, Kräfte der Z-Richtung, das heißt, die Last vom Balg aufzunehmen. Das heißt, im Gegensatz zum Stand der Technik können bei der Erfindung durch das geteilte Gelenklager Kräfte über die Scherenarme in der Auszugsebene übertragen werden.

Die der Erfindung zugrunde liegende Aufgabe besteht darin, ein Scherengestell der eingangs genannten Art bereitzustellen, das in der Länge erweiterbar ist, wobei die einzelnen Scherengestelle zur Zentrierung unmittelbar untereinander in Verbindung stehen sollen

Zur Lösung der Aufgabe dienen erfindungsgemäß die Merkmale des kennzeichnenden Teils des Anspruchs 1 in Verbindung mit den Merkmalen des Oberbegriffs. Hierbei ist bei einem Scherengestell mit mindestens einem ersten und einem zweiten Scherensegment, wobei die Scherensegmente durch ein Gelenklager miteinander verbunden sind, vorgesehen, dass ein jedes Scherensegment durch ein Schwenklager an einem Bauteil anlenkbar ist. Ein jedes Scherengestell umfasst vier Scherenarme, wobei die zwei ersten und zweiten Scherenarme durch das Schwenklager miteinander in Verbindung stehen. Ein jedes Scherensegment weist zwei weitere dritte und vierte Scherenarme auf, die mit den ersten und den zweiten Scherenarmen gelenkig verbunden sind. Das Gelenklager ist senkrecht zur Auszugsebene des Scherengestells in zwei Gelenklagerhälften geteilt, wobei eine Vorrichtung zur lösbaren Verbindung der Gelenklagerhälften vorgesehen ist. Hierbei weisen die dritten und vierten Scherenarme endseitig zur Bildung der Gelenklagerhälften jeweils einen ersten und einen zweiten Gelenklagerkopf auf. Die Gelenklagerköpfe des Gelenklagers stehen miteinander derart kraftübertragend in Verbindung, dass durch das geteilte Gelenklager Kräfte über die Scherenarme in der Auszugsebene übertragen werden.

Die Vorrichtung zur lösbaren Verbindung der Gelenklagerhälften kann hierbei als Kupplungsvorrichtung ausgebildet sein, also zum Beispiel als Federkupplung, die bei beiden Gelenklagerhälften unter Federkraft in Kontakt hält. Denkbar ist allerdings auch eine Kupplungsvorrichtung, die die beiden Gelenklagerhälften formschlüssig verbindet. Die Teilung bedeutet, dass das Gelenklager zwischen zwei Scherensegmenten senkrecht zur Auszugsebene des Scherengestells und vorteilhaft quer, also insbesondere im Winkel von 90°, zur Mittellängsachse eines zu beiden Enden angebundenen Scherengestells in zwei im Wesentlichen gleiche Gelenklagerhälften trennbar ist und die beiden im Wesentlichen identischen Scherensegmente zu einem in sich geschlossenen Scherengestell verbunden werden können. Hierdurch wird erreicht, dass durch die Trennung vom Grundsatz her zwei identische Scherensegmente bereitgestellt werden, was nicht nur die Möglichkeit eröffnet, zum Beispiel durch Zwischenschaltung weiterer Scherensegmente, in sich geschlossene, das heißt, einheitliche Scherengestelle beliebiger Länge herstellen zu können, wobei die einzelnen Scherensegmente eines solchen Scherengestells alle beweglich, das heißt, insbesondere ausziehbar, miteinander in Verbindung stehen, sondern dass auch die Zentrierfähigkeit eines solchen Scherengestells in jedem Kreuzungspunkt des Scherengestells gegeben ist. Für Fahrzeuge oder Fahrzeugteile, die miteinander auch durch solche Scherengestelle verbunden sind, bedeutet dies, dass solche Fahrzeuge oder Fahrzeugteile im Scherengestell im Bereich der Gelenklager der Scherensegmente nahezu beliebig kuppelbar sind. Betrachtet man in diesem Zusammenhang noch einmal den Stand der Technik gemäß der WO 95/06580, so erfolgt hier die Trennung zweier Scherengestelle untereinander außerhalb der Gelenklager, nämlich im Übergangsbereich zwischen zwei Gelenklagern.

Ein jedes Scherensegment ist durch ein Schwenklager an einem Bauteil anlenkbar. Das Bauteil bildet hierbei einen Fixpunkt und kann beispielsweise der Wagenkasten eines Fahrzeugs sein, an dem beispielsweise mittels einer Konsole durch das Schwenklager ein Scherensegment schwenkbar angelenkt ist.

Des Weiteren umfasst ein jedes Scherensegment vier Scherenarme, wobei zwei erste und zweite Scherenarme durch das Schwenklager verdreh- oder verschwenkbar miteinander in Verbindung stehen und wobei ein jedes Scherensegment zwei weitere dritte und vierte Scherenarme aufweist, die mit den ersten und zweiten Scherenarmen gelenkig verbunden sind, wobei die dritten und vierten Scherenarme endseitig zur Bildung der Gelenklagerhälften jeweils einen ersten und zweiten Gelenklagerkopf aufweisen. Hieraus wird deutlich, dass bei Trennung eines Scherengestells in zwei Scherensegmente zwei im Wesentlichen gleiche Gelenklagerhälften entstehen, die durch die beiden Gelenklagerköpfe zweier Scherenarme, die im Bereich des Gelenklagers bzw. der Gelenklagerhälfte zusammenlaufen, gebildet werden. Der erste und der zweite Gelenklagerkopf einer Gelenklagerhälfte eines jeden Scherensegmentes entspricht dem des anderen Scherensegmentes, sodass, wie bereits an anderer Stelle ausgeführt, nicht nur eine Kupplung oder Verbindung der beiden Scherensegmente möglich ist, sondern auch eine Verlängerung des Scherengestells durch Zwischenschaltung eines weiteren Scherensegmentes. Von Interesse ist eine solche Kupplungsmöglichkeit insbesondere im Fahrzeugbau, nämlich bei Gelenkfahrzeugen. Bei einem Gelenkfahrzeug mit einem Übergang mit einem Balg, kann der Balg eine Übergangseinrichtung mit zwei Brückenblechen und eine die Brückenbleche verbindende Trittplatte umfassen. Die Bewegung der Trittplatte relativ zu den beiden Brückenblechen wird durch das Scherengestell kontrolliert. Dies vor dem Hintergrund, dass verhindert werden soll, dass zwischen den Brückenblechen einerseits und der darauf aufliegenden Trittplatte andererseits Spalte entstehen. Wenn dann die Fahrzeugteile oder Fahrzeuge eines solchen Gelenkfahrzeuges entkuppelt werden sollen, dann besteht die Möglichkeit der Entkupplung genau mittig zwischen den beiden Fahrzeugteilen, nämlich genau mittig zwischen den beiden Brückenblechen, das heißt, die Entkupplung kann mittig auf der Trittplatte vorgenommen werden. Die Übergangshälften sind somit gleich, sodass die Kupplung beliebiger mit gleichem Übergang ausgebildeter Fahrzeuge oder Fahrzeugteile besteht. Das heißt, jedes Fahrzeug oder Fahrzeugteil kann mit jedem anderen Fahrzeug oder Fahrzeugteil gleicher Art gekuppelt werden. Hieraus folgt aber auch, dass dadurch, dass die Scherenarme durch das Gelenklager kraftübertragend in Verbindung stehen, die Zentrierung der Trittplatte bei Verbindung mit der Trittplatte gegeben ist.

Vorteilhafte Merkmale und Ausgestaltungen der Erfindung ergeben sich aus den Unteransprüchen.

In Bezug auf die Ausbildung des einen ersten Gelenklagerkopfes ist vorgesehen, dass dieser zwei beabstandet zueinander angeordnete Lagerschenkel aufweist, wobei zwischen den Lagerschenkeln des ersten Gelenklagerkopfes der zweite Gelenklagerkopf lagert. Die beiden ersten und zweiten Gelenklagerköpfe sind relativ zueinander verdrehbar, insbesondere durch Führungen relativ zueinander verdrehbar gehalten, wobei durch die Führungen erreicht wird, dass eine Verschiebung der Gelenkköpfe in radialer Richtung vermieden wird. Als Radialführung zwischen den Gelenklagerköpfen ist eine Nut-und-Feder-Führung vorgesehen. Wenn die Teilung des Scherengestells im Gelenklager vorgenommen wird, entstehen jeweils vier Gelenklagerköpfe der Scherenarme beider Scherensegmente. Die Gelenklagerköpfe sind durch die Kupplungsvorrichtung miteinander gekoppelt. Die Gelenklagerköpfe der beiden Scherensegmente stehen somit kraftübertragend untereinander in Verbindung.

Nach einem weiteren Merkmal der Erfindung sind die ersten und zweiten Gelenklagerköpfe zur Aufnahme eines Gelenkzapfens nach Art einer Lagerschale ausgebildet. Hieraus wird deutlich, dass der Gelenkzapfen die Achse zwischen den beiden Gelenklagerköpfen bildet. Hierbei kann der Gelenkzapfen nach oben über die Gelenklagerköpfe überstehen, um von der Kupplungsvorrichtung erfasst zu werden, wie dies an anderer Stelle nachstehend näher erläutert werden wird.

Im Einzelnen ist des Weiteren beim ersten Gelenklagerkopf vorgesehen, dass dieser zwei beabstandet zueinander angeordnete Gelenklagerschenkel aufweist, die auf ihrer Ober- und Unterseite jeweils eine im Einbauzustand horizontal verlaufene Kupplungsnut aufweisen. Die Kupplungsnut ist hierbei bogenförmig ausgebildet.

Die Kupplungsvorrichtung selbst umfasst ein erstes und ein zweites Kupplungsglied, wobei das erste und das zweite Kupplungsglied miteinander verriegelbar sind, wobei das erste Kupplungsglied an dem einen ersten Scherensegment und das zweite Kupplungsglied an dem anderen zweiten Scherensegment angeordnet ist. Hierbei weist vorteilhaft das erste Kupplungsglied zwei beabstandet zueinander angeordnete Kupplungsfinger zur Aufnahme durch die Kupplungsnut auf. Der Kupplungsfinger besitzt eine korrespondierend zu der Kupplungsnut ausgebildete Ausnehmung zur formschlüssigen Aufnahme des Kupplungsfingers in der Kupplungsnut. Das zweite Kupplungsglied weist in diesem Zusammenhang zwei beabstandet zueinander angeordnete Kupplungsaugen zur Aufnahme des Gelenkzapfens auf, der, wie bereits an anderer Stelle erläutert, über die Gelenklagerköpfe in axialer Richtung des Gelenkzapfens übersteht. Hieraus wird deutlich, dass das erste und das zweite Kupplungsglied derart miteinander verbindbar, das heißt kuppelbar sind, dass die Gelenklagerköpfe der beiden Scherensegmente das bereits angesprochene Gelenklager bilden. Durch die Kupplung der Gelenklagerhälften stehen die Gelenklagerköpfe zweier Scherensegmente kraftübertragend miteinander in Verbindung.

Die Gelenklagerhälften der Scherensegmente sind in Bezug auf die Aufnahme durch das erste und das zweite Kupplungsglied unterschiedlich ausgebildet. Das heißt, das erste Kupplungsglied ist am ersten Gelenksegment und das zweite Kupplungsglied am zweiten Gelenksegment angeordnet.

Nach einem weiteren Merkmal der Erfindung ist vorgesehen, dass die Scherenarme austauschbare Zwischenglieder aufweisen, durch die die Scherenarme verkürzt oder verlängert werden können.

Gegenstand der Erfindung ist auch ein Übergang zwischen zwei gelenkig miteinander verbundenen Fahrzeugen oder Fahrzeugteilen umfassend mindestens eine tunnelförmige Abdeckung, zum Beispiel einen Balg, wobei im Bereich der tunnelförmigen Abdeckung Übergangsbauteile vorgesehen sind, die mittels einer Zentriereinrichtung zwischen den Wagenkästen der Fahrzeuge oder Fahrzeugteile zentrierbar ausgerichtet sind, wobei die Zentriereinrichtung mindestens ein Scherengestell umfasst, wobei das Scherengestell mindestens ein erstes und ein zweites Scherensegment aufweist, wobei die Scherensegmente durch ein Gelenklager miteinander verbunden sind, wobei das Gelenklager senkrecht zur Auszugsebene des Scherengestells in zwei Gelenklagerhälften geteilt ist, wobei eine Vorrichtung zur lösbaren Verbindung der Gelenklagerhälften vorgesehen ist. Ein jedes Scherensegment ist hierbei vorteilhaft durch ein Schwenklager an einem Fahrzeug anlenkbar.

Zu den Übergangsbauteilen, die im Bereich des Übergangs durch das mindestens eine Scherengestell zentrierbar sind, zählen insbesondere mindestens ein plattenförmiges Element einer Seitenwand- und/oder einer Deckenabdeckung und/oder einer Übergangseinrichtung, oder der Mittelrahmen eines zweiteiligen Balges. Des Weiteren ist in diesem Zusammenhang insbesondere vorgesehen, dass das plattenförmige Element einer Deckenabdeckung oder einer Seitenwandabdeckung die Verbindungsplatte zwischen an den Stirnseiten der gelenkig miteinander verbundenen Fahrzeuge oder Fahrzeugteile angeordneten Seitenwandbrückenptatten oder Deckenbrückenplatten bildet. Die jeweils an der Stirnseite eines Fahrzeugteiles angeordneten Deckenbrückenplatten oder Seitenwandbrückenpiatten bilden einen Abstand zueinander. Der Abstand zwischen den beiden Seitenwandbrückenplatten einer Seitenwandabdeckung oder den Deckenbrückenplatten einer Deckenabdeckung ist jeweils durch eine Verbindungsplatte überlappend überbrückt. Die Verbindungsplatte selbst wird zur Vermeidung der Entstehung von Spalten relativ zu den beiden an den Stirnseiten der Fahrzeugteile oder Fahrzeuge angeordneten Deckenbrückenplatten oder Seitenwandbrückenplatten durch mindestens ein Scherengestell zwischen den Deckenbrückenplatten oder den Seitenwandbrückenplatten zentriert, wobei das Scherengestell ebenfalls an den Stirnseiten der Fahrzeuge oder Fahrzeugteile schwenkgelenkig angeordnet ist.

Eine Übergangseinrichtung zwischen zwei gelenkig miteinander verbundenen Fahrzeugen als Bestandteil eines Übergangs ermöglicht das Hinüberwechseln von Personen zwischen zwei Fahrzeugen oder Fahrzeugteilen. In diesem Zusammenhang wird eine Übergangseinrichtung gebildet durch jeweils ein an den Stirnseiten der Fahrzeugteile oder Fahrzeuge angeordnetes Brückenblech, wobei der Abstand zwischen den beiden Brückenblechen durch ein plattenförmiges Element als Trittplatte überbrückt wird. An der Unterseite der Trittplatte ist das mindestens eine Scherengestell angeordnet. Eine solche Zentrierung ist erforderlich, um zu gewährleisten, dass während der Fahrt keine Spalte zum Beispiel zwischen der Trittplatte und den Brückenblechen entstehen.

Anhand der Zeichnungen wird die Erfindung nachstehend beispielhaft näher erläutert.
- Fig. 1: zeigt die Übergangseinrichtung in einer perspektivischen Darstellung, wobei die Wagenkästen der gelenkig miteinander verbundenen Fahrzeuge lediglich angedeutet sind;
- Fig. 2: zeigt eine Ansicht von unten auf die Übergangseinrichtung gemäß Fig. 1;
- Fig. 3: zeigt zwei nebeneinander angeordnete Scherensegmente zweier parallel zueinander verlaufener Scherengestelle, wie sie in Fig. 2 dargestellt sind;
- Fig. 4: zeigt eine Darstellung gemäß Fig. 3, wobei die Scherensegmente endseitig jeweils ein Kuppelglied aufweisen;
- Fig. 5: zeigt schematisch einen Übergang mit einer Seitenwand- und einer Deckenabdeckung, der vom Prinzip her ähnlich oder identisch zu der Übergangseinrichtung ist, wie sie Gegenstand der Fig. 1 ist;
- Fig. 6: zeigt schematisch die Zentrierung des Mittelrahmens zweier Balghälften eines Balges als Teil eines Übergangs zwischen gelenkig miteinander verbundener Fahrzeuge.

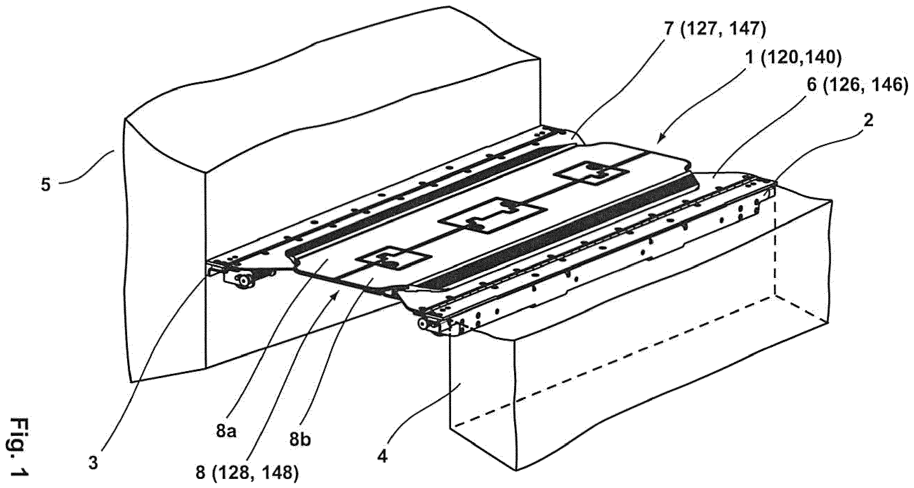

Die in Fig. 1 dargestellte Übergangseinrichtung weist das Bezugszeichen 1 auf. Die Übergangseinrichtung 1 ist durch Konsolen 2, 3 mit den Wagenkästen 4, 5 verbunden, wobei die Wagenkästen lediglich schematisch angedeutet sind. Die Übergangseinrichtung 1 ist Bestandteil eines Übergangs zwischen zwei gelenkig miteinander verbundenen Fahrzeugen, der üblicherweise noch einen nicht dargestellten Balg umfasst, der sich zwischen den Stirnwänden der Wagenkästen 4, 5 der Fahrzeuge oder Fahrzeugteile erstreckt. Der Balg kann die Übergangseinrichtung hierbei tunnelartig, das heißt U-förmig umgeben oder auch kastenförmig geschlossen ausgebildet sein.

Die Übergangseinrichtung 1 umfasst jeweils ein an der Konsole 2, 3 angeordnetes Brückenblech 6, 7, wobei auf den Brückenblechen 6, 7 die insgesamt mit 8 bezeichnete Trittplatte lagert. Die Trittplatte 8 ist mittig teilbar, wodurch in Bezug auf die Übergangseinrichtung 1 bei Teilung der Übergangseinrichtung zwei identische Übergangseinrichtungshälften entstehen. Die Trittplattenhälften weisen das Bezugszeichen 8a, 8b auf.

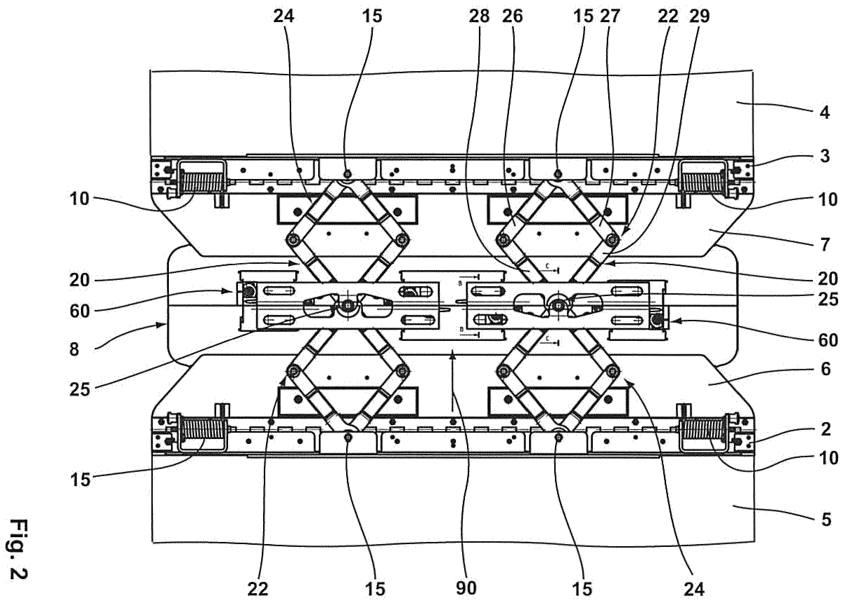

Fig. 2 zeigt eine Ansicht von unten auf die Übergangseinrichtung 1. Erkennbar sind wiederum die beiden Konsolen 2, 3, die mit den Wagenkästen 4, 5 in Verbindung stehen. Die Konsolen 2, 3 zeigen jeweils zwei beabstandet zueinander angeordnete Spiralfedern 10, wobei die Spiralfedern 10 dafür sorgen, dass das jeweilige Brückenblech 6, 7 gegen die Unterseite der Trittplatte 8 gedrückt wird, um bei einer Teilung der Übergangseinrichtung, beispielsweise beim Entkuppeln zweier Fahrzeugteile, und somit bei Teilung des Übergangs, das entsprechende Brückenblech und die Trittplattenhälften 8a, 8b in der Horizontalen zu halten.

Die Konsolen 2, 3 nehmen darüber hinaus die beiden parallel zueinander verlaufenden Scherengestelle 20 auf. Die Scherengestelle 20 sind, wie bereits ausgeführt, vom Grundsatz her zueinander identisch. Die Auszugsebene ist durch den Pfeil 90 gekennzeichnet. Ein jedes Scherengestell 20 umfasst ein erstes Scherensegment 22 und ein zweites Scherensegment 24. Erkennbar liegen die ersten und die zweiten Scherensegmente 22, 24 eines jeden Scherengestells 20 diagonal einander gegenüber. Gekuppelt sind das erste und das zweite Scherensegment 22, 24 durch das mit 25 bezeichnete Gelenklager. Die Verbindung der Scherengestelle 20 mit den Konsolen 2, 3 erfolgt durch Schwenklager 15. Hierbei ist im Einzelnen vorgesehen, dass jedes Scherensegment einen ersten Scherenarm 26 und einen zweiten Scherenarm 27 umfasst, die durch das Schwenklager 15 verdrehbar aufgenommen werden. Der erste und der zweite Scherenarm 26, 27 stehen mit einem dritten Scherenarm 28 und einem vierten Scherenarm 29 gelenkig in Verbindung, wie sich dies unmittelbar in Anschauung der Fig. 2 ergibt. Endseitig wird der dritte und der vierte Scherenarm 28, 29 im Gelenklager 25 zusammengeführt. Im Bereich des Gelenklagers 25 ist die mit 60 bezeichnete Kupplungsvorrichtung vorgesehen.

Die Scherenarme 26, 27, 28, 29 selbst weisen einsetzbare Zwischenglieder 80 auf, durch die die Scherenarme 26, 27, 28, 29 in ihrer Länge, und damit die Länge der Scherensegmente, an die Länge des Übergangs anpassbar sind. Das heißt, die Zwischenglieder haben eine Adapterfunktion.

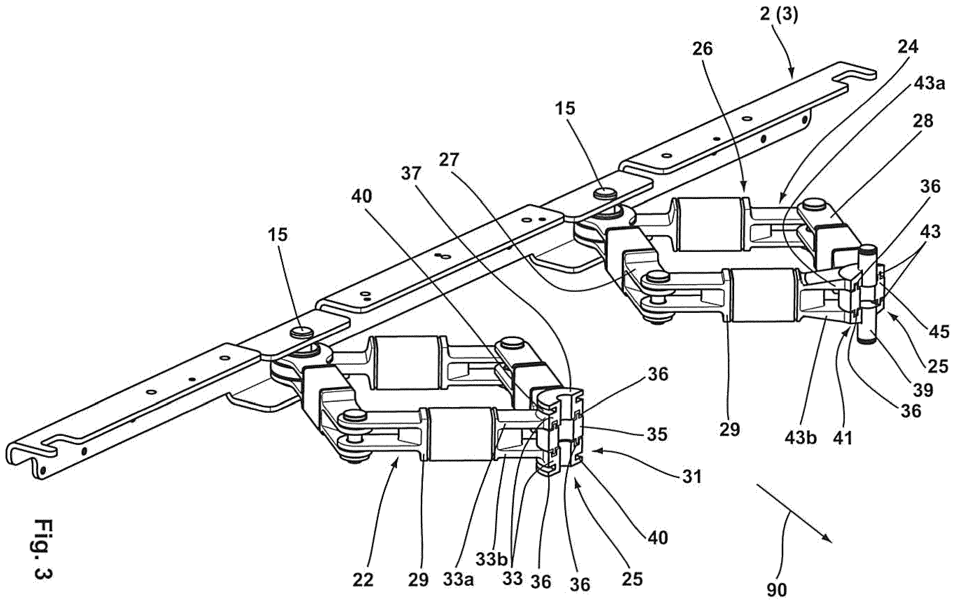

Betrachtet man nunmehr die Fig. 3, die ein erstes Scherensegment 22 und ein zweites Scherensegment 24 zeigt, die parallel zueinander verlaufend an der Konsole 2, 3 durch das Schwenklager 15 angelenkt sind. Erkennbar sind darüber hinaus die an dem Schwenklager 15 angeordneten ersten und zweiten Scherenarme 26, 27, die gelenkig mit dem dritten Scherenarm 28 und dem vierten Scherenarm 29 verbunden sind. Das mit 25 bezeichnete Gelenklager wird durch die beiden Gelenklagerhälften 31, 41 des ersten Scherensegmentes 22 und des zweiten Scherensegmentes 24 gebildet. Im Einzelnen umfasst die Gelenklagerhälfte 31, 41 einen ersten U-förmig ausgebildeten Gelenklagerkopf 33, 43, wobei zwischen den Schenkeln 33a, 33b und 43a, 43b des U-förmig ausgebildeten ersten Gelenklagerkopfes der zweite Gelenklagerkopf 35, 45 lagert, der Teil des dritten Scherenarmes 28 ist. Der ersten Gelenklagerkopf 33, 43, der U-förmig ausgebildet ist, ist Bestandteil des vierten Scherenarmes 29. Der erste Gelenklagerkopf 33, 43 steht darüber hinaus mit dem zweiten Gelenklagerkopf 35, 45 durch zwei Führungen 36 in Verbindung, die nach Art einer Nut-und-Feder-Verbindung ausgebildet sind. Durch die beiden Führungen 36, die zwischen den beiden Gelenklagerköpfen 33, 35, 43 angeordnet sind, wird eine Führung in radialer Richtung erreicht.

Die Gelenklagerhälfte 41 nimmt darüber hinaus, wie dies ebenfalls aus Fig. 3 erkennbar ist, den Gelenkzapfen 39 auf.

Das erste Scherensegment 22 ist im Wesentlichen identisch zu dem zweiten Scherensegment 24 ausgebildet. Ein Unterschied besteht lediglich darin, dass der erste Gelenklagerkopf 33 des erste Gelenksegments 22 jeweils am oberen und am unteren Ende einen Überstand 37 hat und eine Kupplungsnut 40 aufweist, die in ähnlicher Weise wie der Gelenkzapfen 39 in Verbindung mit der Kupplungsvorrichtung 60 der Verbindung eines ersten mit einem zweiten Scherensegment dient, um ein Scherengestell zu bilden. Die Scherensegmente können insofern auch als erstes, positives und zweites, negatives Scherensegment bezeichnet werden.

Wie bereits an anderer Stelle erläutert, sind in Fig. 3 lediglich ein erstes und ein zweites Scherensegment 22, 24 dargestellt. Es wird darauf hingewiesen, dass ein vollständiges Scherengestell aus mindestens einem ersten und mindestens einem zweiten Scherensegment 22, 24 besteht. Das heißt, dass das erste Scherensegment 22 gemäß Fig. 3 zur Bildung eines vollständigen Scherengestells mit dem zweiten Scherensegment 24 im Bereich des Gelenkzapfens 39 zur Bildung des Gelenklagers durch die Kupplungsvorrichtung verbunden wird. Der Vorteil dieser kreuzweisen Anordnung von ersten und zweiten, also positiven und negativen, Scherensegmenten an den jeweiligen Konsolen 2, 3 besteht darin, dass hierdurch immer eine Kupplungsmöglichkeit besteht, was insbesondere dann von Interesse ist, wenn beispielsweise, wie dies bereits an anderer Stelle erläutert worden ist, die Scherengestelle im Bereich eines Übergangs zwischen zwei gelenkig miteinander verbundenen Fahrzeugen oder Fahrzeugteilen angeordnet sind, wobei die Fahrzeuge oder Fahrzeugteile eines solchen Gelenkfahrzeuges beliebig untereinander kuppelbar sein sollen.

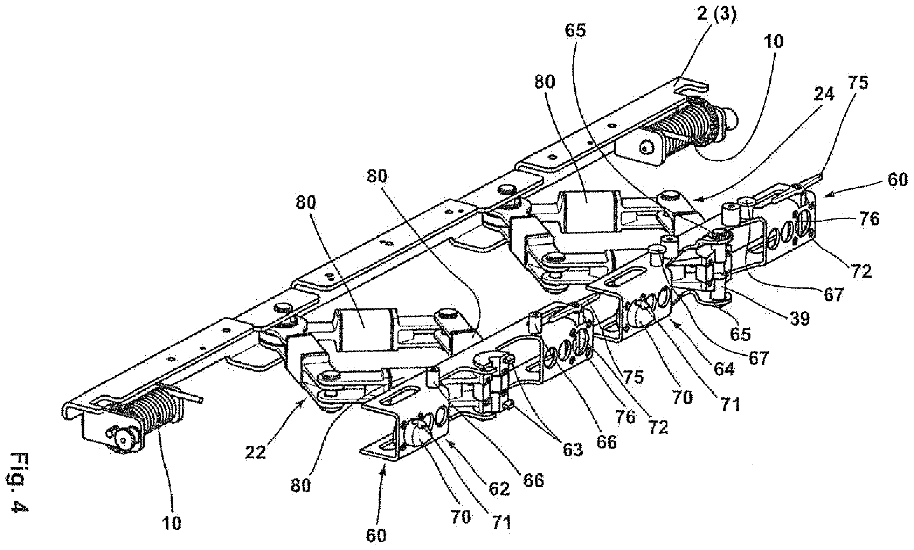

Betrachtet man nunmehr Fig. 4, so erkennt man die Ausbildung der mit 60 bezeichneten Kuppelungsvorrichtung. Das erste, positive und das zweite, negative Scherensegment 22, 24 besitzen hierbei endseitig jeweils ein positives und ein negatives Kuppelglied 62, 64, wobei die beiden Kupplungsglieder 62, 64 die Kupplungsvorrichtung 60 bilden. Das positive Kupplungsglied 62 weist darüber hinaus zwei übereinander angeordnete Kupplungsfinger 63 auf, die in die am oberen und am unteren Ende des ersten Gelenklagerkopfes 33 angeordnete Kupplungsnut 40 eingreifen, die im Überstand 37 (Fig. 3) angebracht ist.

Korrespondierend hierzu nimmt das negative Kupplungsglied 64 mit den übereinander und beabstandet zueinander angeordneten Kupplungsaugen 65 den Gelenkzapfen 39 auf. Zur Herstellung eines vollständigen Scherengestells 20 werden nun das positive und das negative Kupplungsglied 62, 64 miteinander in Eingriff gebracht, wobei der mit 70 bezeichnete Riegelzapfen in die entsprechende Zapfenöffnung 72 des entsprechenden Kuppelgliedes 62, 64 eingreift. Der Riegelzapfen 70 weist eine Öffnung 71 auf, in die das Riegelglied 75 mit dem Riegelbolzen 76 einsteckbar ist. Das heißt, dass das positive Kupplungsglied 62 mit dem negativen Kupplungsglied 64 zu beiden Enden durch das Riegelglied 75 in Verbindung mit dem Riegelzapfen 70 gekuppelt ist.

Sowohl das positive als auch das negative Kupplungsglied 62, 64 sind durch Fest- und Loslager 66, 67 mit der Trittplatte 8 zur Führung der Trittplatte verbunden. Im Einzelnen weist das positive Kupplungsglied zwei Gewindenocken 66 als Festlager und das negative Kupplungsglied zwei Kopfbolzen 67 als Loslager zur Verbindung mit der Trittplatte 8 auf.

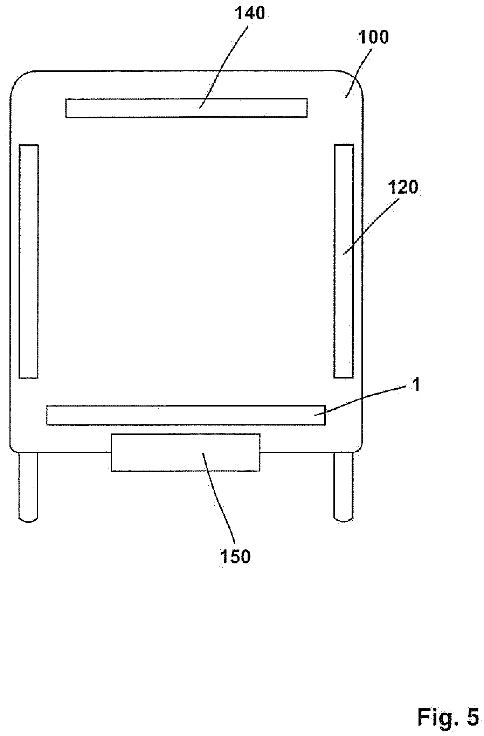

Fig. 5 zeigt in diesem Zusammenhang, wie bereits ausgeführt, schematisch die Anordnung der Seitenwandabdeckung 120 zu beiden Seiten des Balges 100 auf der Innenseite des Balges sowie der Deckenabdeckung 140, ebenfalls auf der Innenseite des Balges 100. Der Balg ist in den Figuren 1 bis 4 der besseren Übersichtlichkeit wegen weggelassen worden. Die gelenkige Verbindung unter der Übergangseinrichtung 1 besitzt das Bezugszeichen 150. Sowohl zu der Seitenwandabdeckung als auch zu der Deckenabdeckung ist zu bemerken, dass beide in im Wesentlichen gleicher Weise ausgebildet sind, wie die Übergangseinrichtung 1. Insofern wird in Bezug auf die Beschreibung der Einzelteile bzw. den Aufbau auf das zu den Figuren 1 bis 4 Ausgeführte ausdrücklich Bezug genommen. Die Seitenwandabdeckung stellt sich zum besseren Verständnis somit im Wesentlichen als nichts anderes dar, als eine Übergangseinrichtung um 90° gedreht, wobei hinter der Seitenwandabdeckung das mindestens eine Scherengestell vorgesehen ist. Die Seitenwandabdeckung 120 umfasst jeweils eine an der Stirnseite eines jeden Fahrzeugs angeordnete Seitenwandbrückenplatte 126, 127, die einen Abstand zueinander bilden, der durch die Verbindungsplatte 128 überbrückt wird. Die Verbindungsplatte 128 ist mit dem mindestens einen Scherengestell 20 verbunden.

Gleiches gilt für die Deckenabdeckung 140 mit den Deckenbrückenplatten 146, 147 und der Verbindungsplatte 148 zur Überbrückung des Abstandes zwischen den beiden Deckenbrückenplatten 146, 147.

Das plattenförmige Element 128, 148 der Seitenwandabdeckung und der Deckenabdeckung entspricht hierbei der Trittplatte 8 der Übergangseinrichtung; die Seitenwand- und die Deckenbrückenplatten 126, 127; 146, 147 sind gleichzusetzen mit den Brückenblechen 6, 7.

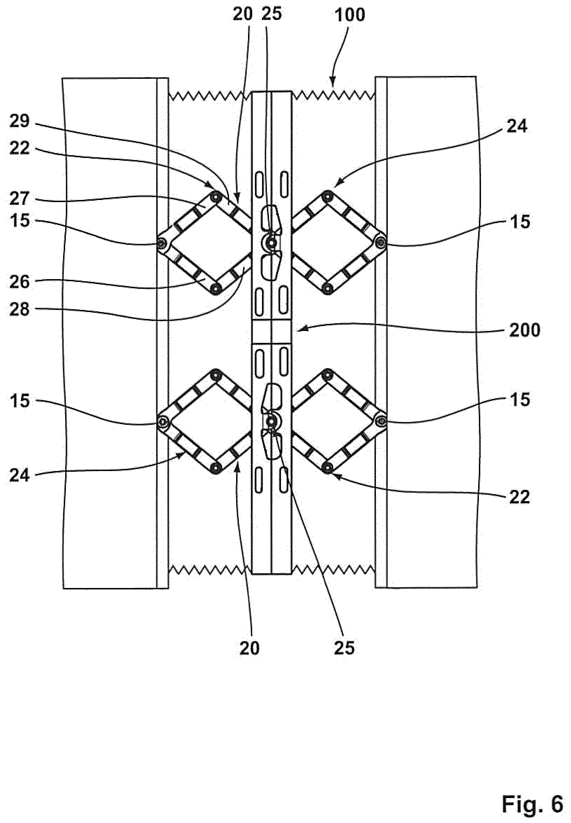

Zwei Scherengestelle zur Zentrierung des Mittelrahmens 200 eines Balges mit zwei Balghälften zeigt in einer Ansicht von oben Fig. 6. Die beiden Scherengestelle 20 sind im Bereich des Gelenklagers 25 insbesondere durch die Kupplungsvorrichtung 60 mit dem Mittelrahmen 200 verbunden. Der Mittelrahmen kann aus zwei Kuppelrahmen ausgebildet sein, wobei jedem Kuppelrahmen ein Kupplungsglied 62, 64 zugeordnet ist. Die Scherengestelle sind in gleicher Weise ausgebildet, wie die Scherengestelle der Übergangseinrichtung. Insofern wird hierauf verwiesen. Die Anbindung des jeweils mindestens einen Scherengestells erfolgt wie bei der Übergangseinrichtung, der Seitenwand- und der Deckenabdeckung auch durch Konsolen 2, 3.

### Bezugszeichenliste:

- 1: Übergangseinrichtung
- 2: Konsole
- 3: Konsole
- 4: Wagenkasten
- 5: Wagenkasten
- 6: Brückenblech
- 7: Brückenblech
- 8: Trittplatte
- 8a: Trittplattenhälfte
- 8b: Trittplattenhälfte
- 10: Spiralfeder
- 15: Schwenklager
- 20: Scherengestell
- 22: erstes (positives) Scherensegment
- 24: zweites (negatives) Scherensegment
- 25: Gelenklager
- 26: erster Scherenarm
- 27: zweiter Scherenarm
- 28: dritter Scherenarm
- 29: vierter Scherenarm
- 31: Gelenklagerhälfte
- 33: erster Gelenklagerkopf (positives Gelenksegment)
- 33a: Schenkel
- 33b: Schenkel
- 35: zweiter Gelenklagerkopf (positives Gelenksegment)
- 36: Führung
- 37: Überstand (Gelenklagerkopf)
- 39: Gelenkzapfen
- 40: Kupplungsnut
- 41: Gelenklagerhälfte
- 43: erster Gelenklagerkopf (negatives Gelenksegment)
- 43a: Schenkel
- 43b: Schenkel
- 45: zweiter Gelenklagerkopf (negatives Gelenksegment)
- 60: Vorrichtung
- 62: positives Kupplungsglied
- 63: Kupplungsfinger
- 64: negatives Kupplungsglied
- 65: Kupplungsauge
- 66: Gewindenocken
- 70: Riegelzapfen
- 71: Öffnung
- 72: Zapfenöffnung
- 75: Riegelglied
- 76: Riegelbolzen
- 80: Zwischenglied
- 90: Pfeil (Auszugsebene)
- 100: Balg
- 120: Seitenwandabdeckung
- 126: Seitenwandbrückenplatte
- 127: Seitenwandbrückenplatte
- 128: Verbindungsplatte der Seitenwandabdeckung
- 140: Deckenabdeckung
- 146: Deckenbrückenplatte
- 147: Deckenbrückenplatte
- 148: Verbindungsplatte der Deckenabdeckung
- 150: gelenkige Verbindung zwischen den Fahrzeugen oder Fahrzeugteilen
- 200: Mittelrahmen zwischen zwei Balghälften

## Patentansprüche

1. Scherengestell (20) mit mindestens einem ersten und einem zweiten Scherensegment (22, 24), wobei die Scherensegmente (22, 24) durch ein Gelenklager (25) miteinander verbunden sind, wobei das Gelenklager (25) senkrecht zur Auszugsebene des Scherengestells in zwei Gelenklagerhälften (31, 41) geteilt ist, wobei eine Vorrichtung (60) zur lösbaren Verbindung der Gelenklagerhälften (31,41) vorgesehen ist, wobei ein jedes Scherensegment (22, 24) durch ein Schwenklager (15) an einem Bauteil anlenkbar ist, wobei ein jedes Scherensegment (22, 24) vier Scherenarme (26, 27; 28, 29) umfasst, **dadurch gekennzeichnet, dass** die zwei ersten und zweiten Scherenarme (26, 27) durch das Schwenklager (15) miteinander in Verbindung stehen, und wobei ein jedes Scherensegment (28, 29) zwei weitere dritte und vierte Scherenarme (28, 29) aufweist, die mit den ersten und den zweiten Scherenarmen (26, 27) gelenkig verbunden sind, wobei die dritten und vierten Scherenarme (28, 29) endseitig zur Bildung der Gelenklagerhälften (31, 41) jeweils einen ersten und einen zweiten Gelenklagerkopf (33, 35; 43, 45) aufweisen, wobei die Gelenklagerköpfe (33, 35; 43, 45) des Gelenklagers (25) miteinander derart kraftübertragend in Verbindung stehen, dass durch das geteilte Gelenklager (25) Kräfte über die Scherenarme in der Auszugsebene übertragen werden.

2. Scherengestell (20) nach Anspruch 1,
**dadurch gekennzeichnet,**
**dass** der eine erste Gelenklagerkopf (33, 43) zwei beabstandet zueinander angeordnete Lagerschenkel (33a, 33b; 43a, 43b) aufweist, wobei zwischen den Lagerschenkeln des ersten Gelenklagerkopfes ein zweiter Gelenklagerkopf (35, 45) lagert.

3. Scherengestell (20) nach einem der Ansprüche 1 oder 2,
**dadurch gekennzeichnet,**
**dass** die ersten und zweiten Gelenklagerköpfe (33, 43; 35, 45) mit Führungen (36) relativ zueinander verdrehbar miteinander in Verbindung stehen.

4. Scherengestell (20) nach einem der Ansprüche 1 bis 3,
**dadurch gekennzeichnet,**
**dass** die ersten und zweiten Gelenklagerköpfe (33, 43; 35, 45) zur Aufnahme eines Gelenkzapfens (39) nach Art einer Lagerschale ausgebildet sind.

5. Scherengestell (20) nach einem der Ansprüche 1 bis 4,
**dadurch gekennzeichnet,**
**dass** die zwei beabstandet zueinander angeordneten Lagerschenkel (33a, 33b) des einen ersten Gelenklagerkopfes (33) auf ihrer Ober- und ihrer Unterseite jeweils eine horizontal verlaufene Kupplungsnut (40) aufweisen.

6. Scherengestell (20) nach einem der voranstehenden Ansprüche,
**dadurch gekennzeichnet,**
**dass** die Kupplungsvorrichtung (60) ein positives und ein negatives Kupplungsglied (62, 64) umfasst, wobei das positive und das negative Kupplungsglied (62, 64) miteinander verriegelbar sind, wobei das positive Kupplungsglied (62) an einem ersten Scherensegment (22) und das negative Kupplungsglied (64) an einem anderen zweiten Scherensegment (24) anbringbar ist.

7. Scherengestell (20) nach Anspruch 6,
**dadurch gekennzeichnet,**
**dass** das positive Kupplungsglied (62) zwei beabstandet zueinander angeordnete Kupplungsfinger (63) zur Aufnahme durch die Kupplungsnut (40) aufweist.

8. Scherengestell (20) nach Anspruch einem der Ansprüche 6 oder 7,
**dadurch gekennzeichnet,**
**dass** das negative Kupplungsglied (64) zwei beabstandet zueinander angeordnete Kupplungsaugen (65) zur Aufnahme des Gelenkzapfens (39) aufweist.

9. Scherengestell (20) nach einem der Ansprüche 6 bis 8,
**dadurch gekennzeichnet,**
**dass** das negative und das positive Kupplungsglied (62, 64) derart miteinander verbindbar sind, dass die Gelenklagerköpfe der beiden Scherensegmente (22, 24) das Gelenklager (25) bilden.

10. Scherengestell (20) nach einem der voranstehenden Ansprüche,
**dadurch gekennzeichnet,**
**dass** die Scherenarme (26, 27, 28, 29) austauschbare Zwischenglieder (80) aufweisen.

11. Übergang zwischen zwei gelenkig miteinander verbundenen Fahrzeugen oder Fahrzeugteilen umfassend mindestens eine tunnelförmige Abdeckung, z. B. einen Balg, wobei im Bereich der tunnelförmigen Abdeckung Übergangsbauteile angeordnet sind, die mittels einer Zentriereinrichtung zwischen den Wagenkästen der Fahrzeuge oder Fahrzeugteile zentrierbar ausrichtbar sind, wobei die Zentriereinrichtung mindestens ein Scherengestell nach Anspruch 1 umfasst.

12. Übergang nach Anspruch 11,
**dadurch gekennzeichnet,**
**dass** ein jedes Scherensegment (22, 24) durch ein Schwenklager (15) an einem Fahrzeug anlenkbar ist.

13. Übergang nach Anspruch 11 oder 12,
**dadurch gekennzeichnet,**
**dass** das Scherengestell (20) nach einem oder mehrerer der Ansprüche 3 bis 13 ausbildet ist.

14. Übergang nach einem der Ansprüche 11 bis 13,
**dadurch gekennzeichnet,**
**dass** die Übergangsbauteile durch mindestens ein plattenförmiges Element einer Seitenwandabdeckung (120) und/oder einer Deckenabdeckung (140) und/oder einer Übergangseinrichtung (1) gebildet sind , oder der Mittelrahmen (200) eines zweiteiligen Balges.

15. Übergang nach Anspruch 14,
**dadurch gekennzeichnet,**
**dass** das plattenförmige Element einer Seitenwand- oder Deckenabdeckung (120, 140) die Verbindungsplatte (128, 148) zwischen an den Stirnseiten der gelenkig miteinander verbundenen Fahrzeuge oder Fahrzeugteile (4, 5) angeordneten Seitenwand- oder Deckenbrückenplatten (126, 127; 146, 147) bildet.

16. Übergang nach Anspruch 14 oder 15,
**dadurch gekennzeichnet,**
**dass** das plattenförmige Element einer Übergangseinrichtung (1) durch die Trittplatte (8) gebildet ist, die den Abstand zwischen an den Stirnseiten der Fahrzeuge oder Fahrzeugteile (4, 5) angeordneten Brückenbleche (6, 7) überbrückt.

## Claims

1. A scissor-type stand (20) with at least one first and one second segment (22, 24), wherein the segments (22, 24) are connected with each other by means of a pivoting bearing (25), wherein the pivoting bearing (25) is divided into two pivoting bearing halves (31, 41) perpendicular to the plane of extension of the scissor-type stand (20), wherein a device (60) for detachable connection of the pivoting bearing halves (31, 41) is provided, wherein each segment (22, 24) can be hinged to a component part by means of a swivel bearing (15), wherein each segment (22, 24) comprises four arms (26, 27; 28, 29),
**characterized in**
**that** the two first and second arms (26, 27) are connected with each other by means of the swivel bearing (15), and wherein each segment (28, 29) comprises two further third and fourth arms (28, 29), which are articulately connected with the first and second arms (26, 27), wherein the third and fourth arms (28, 29) for the formation of the pivoting bearing halves (31, 41) each comprise a first and a second pivoting bearing head (33, 35; 43, 45) on their end, wherein the pivoting bearing heads (33, 35; 43, 45) of the pivoting bearing (25) are connected with each other in a force-transmitting manner such that through the divided pivoting bearing (25) forces are transmitted via the arms in the plane of extension.

2. A scissor-type stand (20) according to claim 1,
**characterized in**
**that** the one first pivoting bearing head (33, 43) comprises two bearing legs (33a, 33b; 43a, 43b) spaced apart from each other, wherein a second pivoting bearing head (35, 45) is mounted between the bearing legs of the first pivoting bearing head.

3. A scissor-type stand (20) according to any one of claims 1 or 2,
**characterized in**
**that** the first and the second pivoting bearing heads (33, 43; 35, 45) are
connected with each other rotatably relative to each other with guidances (36).

4. A scissor-type stand (20) according to any one of claims 1 to 3,
**characterized in**
**that** the first and the second pivoting bearing heads (33, 43; 35, 45) are formed in the manner of a bearing shell for receiving a pivot pin (39).

5. A scissor-type stand (20) according to any one of claims 1 to 4,
**characterized in**
**that** the two bearing legs (33a, 33b) spaced apart from each other of the one first pivoting bearing head (33) on their upper side and on their underside each comprise a coupling groove (40) extending horizontally.

6. A scissor-type stand (20) according to any one of the preceding claims,
**characterized in**
**that** the coupling device (60) comprises a positive and a negative coupling member (62, 64), wherein the positive and the negative coupling member (62, 64) are lockable with each other, wherein the positive coupling member (62) is attachable to a first segment (22) and the negative coupling member (64) is attachable to the other second segment (24).

7. A scissor-type stand (20) according to claim 6,
**characterized in**
**that** the positive coupling member (62) comprises two coupling fingers (63) spaced apart from each other to be received by the coupling groove (40).

8. A scissor-type stand (20) according to any one of claims 6 or 7,
**characterized in**
**that** the negative coupling member (64) comprises two coupling eyes (65) spaced apart from each other for receiving the pivot pin (39).

9. A scissor-type stand (20) according to any one of claims 6 to 8,
**characterized in**
**that** the negative and the positive coupling member (62, 64) can be connected with each other in such a manner that the pivoting bearing heads of the two segments (22, 24) form the pivoting bearing (25).

10. A scissor-type stand (20) according to any one of the preceding claims,
**characterized in**
**that** the arms (26, 27, 28, 29) comprise replaceable intermediate members (80).

11. A transition between two articulately connected vehicles or vehicle parts comprising at least one tunnel-shaped covering, for example, a bellows, wherein transition component parts are located in the area of the tunnel-shaped covering, which transition component parts can be oriented in a center-adjustable manner by means of a centering device between the car bodies of the vehicles or vehicle parts, wherein the centering device comprises at least one scissor-type stand according to claim 1.

12. The transition according to claim 11,
**characterized in**
**that** each segment (22, 24) can be hinged to a vehicle by means of a swivel bearing (15).

13. The transition according to claim 11 or 12,
**characterized in**
**that** the scissor-type stand (20) is formed according to any one or more of claims 3 to 13.

14. The transition according to any one of claims 11 to 13,
**characterized in**
**that** the transition component parts are formed by at least one plate-shaped element of a side wall covering (120) and/or a roof covering (140) and/or a transition device (1) or the central frame (200) of a two-part bellows.

15. The transition according to claim 14,
**characterized in**
**that** the plate-shaped element of a side wall or roof covering (120, 140) forms the connecting plate (128, 148) between the side wall or roof bridge plates (126, 127; 146, 147) located on the fronts of the articulately connected vehicles or vehicle parts (4, 5).

16. The transition according to claim 14 or 15,
**characterized in**
**that** the plate-shaped element of a transition device (1) is formed by the treadplate (8) which bridges over the distance between the bridge plates (6, 7) located on the fronts of the vehicles or vehicle parts (4, 5).

## Revendications

1. Structure articulée (20) avec au moins un premier et un second segment (22, 24), dans laquelle les segments (22, 24) sont reliés par un palier à articulation (25), dans lequel le palier à articulation (25) est divisé en deux moitiés de palier à articulation (31, 41) perpendiculairement au plan d'extension, dans lequel un dispositif (60) pour une liaison amovible des moitiés de palier à articulation (31, 41) est prévu, dans lequel chaque segment (22, 24) peut être monté de façon articulée à un composant par un palier pivotant (15), dans lequel chaque segment (22, 24) comporte quatre bras (26, 27; 28, 29),
**caractérisé en ce**
**que** les deux premiers et seconds bras (26, 27) sont reliés entre eux par le palier pivotant (15) et dans lequel chaque segment (28, 29) comporte deux autres troisième et quatrième bras (28, 29) qui sont reliés de manière articulée avec les premiers et seconds bras (26, 27), dans lesquels les troisième et quatrième bras (28, 29) sur leur extrémité chacun comporte une première et seconde tête de palier à articulation (33, 35; 43, 45) pour former les moitiés de palier à articulation (31, 41), dans lesquelles les têtes de palier à articulation (33, 35; 43, 45) du palier à articulation (25) sont reliées entre eux de façon à transmettre des forces de sorte que par le palier à articulation (25) divisé des forces sont transmises par les bras dans le plan d'extension.

2. Structure articulée (20) selon la revendication 1,
**caractérisé en ce**
**que** l'une première tête de palier à articulation (33, 43) comporte deux branches de palier (33a, 33b; 43a, 43b) espacées l'une de l'autre, dans lesquelles entre les branches de palier de la première tête de palier à articulation une seconde tête de palier à articulation (35, 45) est logée.

3. Structure articulée (20) selon l'une quelconque des revendications 1 ou 2,
**caractérisé en ce**
**que** les premières et secondes têtes de palier à articulation (33, 43; 35, 45) sont reliées entre eux avec des moyens de guidage (36) en pouvant être déplacées en rotation l'une par rapport à l'autre.

4. Structure articulée (20) selon l'une quelconque des revendications 1 à 3,
**caractérisé en ce**
**que** les premières et les secondes têtes de palier à articulation (33, 43; 35, 45) sont formées à la manière d'un coussinet de palier pour recevoir un pivot (39).

5. Structure articulée (20) selon l'une quelconque des revendications 1 à 4,
**caractérisé en ce**
**que** les deux branches de palier (33a, 33b) espacées l'une de l'autre de l'une première tête de palier à articulation (33) sur leur face supérieure et leur face inférieure chacune comporte une rainure d'accouplement (40) s'étendant horizontalement.

6. Structure articulée (20) selon l'une quelconque des revendications précédentes,
**caractérisé en ce**
**que** le dispositif d'accouplement (60) comporte un élément d'accouplement positif et un élément d'accouplement négatif (62, 64), dans lequel l'élément d'accouplement positif et l'élément d'accouplement négatif (62, 64) sont verrouillables l'un à l'autre, dans lequel l'élément d'accouplement positif (62) est fixable à un premier segment (22) et l'élément d'accouplement négatif (64) est fixable à l'autre second segment (24).

7. Structure articulée (20) selon la revendication 6,
**caractérisé en ce**
**que** l'élément d'accouplement positif (62) comporte deux doigts d'accouplement (63) espacés l'un de l'autre pour la réception par la rainure d'accouplement (40).

8. Structure articulée (20) selon l'une quelconque des revendications 6 ou 7,
**caractérisé en ce**
**que** l'élément d'accouplement négatif (64) comporte deux yeux d'accouplement (65) espacés l'un de l'autre pour recevoir le pivot (39).

9. Structure articulée (20) selon l'une quelconque des revendications 6 à 8,
**caractérisé en ce**
**que** l'élément d'accouplement négatif et l'élément d'accouplement positif (62, 64) sont raccordables entre eux de manière que les têtes de palier à articulation des deux segments (22, 24) forment le palier à articulation (25).

10. Structure articulée (20) selon l'une quelconque des revendications précédentes,
**caractérisé en ce**
**que** les bras (26, 27, 28, 29) comportent des éléments intermédiaires (80) interchangeables.

11. Passage entre deux véhicules ou parties du véhicule reliés de manière articulée comportant au moins un recouvrement en forme de tunnel, par exemple, un soufflet, dans lequel dans la zone du recouvrement en forme de tunnel des composants de passage sont agencés qui peuvent être alignés et centrés au moyen d'un dispositif de centrage entre les caisses de véhicule des véhicules ou parties de véhicule, dans lequel le dispositif de centrage comporte au moins un structure articulée (20) selon la revendication 1.

12. Passage selon la revendication 11,
**caractérisé en ce**
**que** chaque segment (22, 24) peut être monté de façon articulée à un véhicule par un palier pivotant (15).

13. Passage selon la revendication 11 ou 12,
**caractérisé en ce**
**que** la structure articulée (20) est formée selon l'une ou plusieurs des revendications 3 à 13.

14. Passage selon l'une quelconque des revendications 11 à 13,
**caractérisé en ce**
**que** les composants du passage sont formés par au moins un élément en forme de plaque d'un recouvrement de paroi latérale (120) et/ou d'un recouvrement de plafond (140) et/ou d'un dispositif de passage (1) ou le cadre central (200) d'un soufflet bipartite.

15. Passage selon la revendication 14,
**caractérisé en ce**
**que** l'élément en forme de plaque d'un recouvrement de paroi latérale ou d'un recouvrement de plafond (120, 140) forme la plaque de raccordement (128, 148) entre des plaques de paroi latérale ou des plaques de pont de plafond (126, 127; 146, 147) agencées aux faces frontales des véhicules ou parties de véhicule reliés de manière articulée entre eux (4, 5).

16. Passage selon la revendication 14 ou 15,
**caractérisé en ce**
**que** l'élément en forme de plaque d'un dispositif de passage (1) est formé par le marchepied (8) qui comble la distance entre des tôles de pont (6, 7) agencées aux faces frontales des véhicules ou des parties de véhicule (4, 5).
